# EUROPEAN PATENT APPLICATION

(11) **EP 0 955 751 A2**
(43) Date of publication of application: **10.11.1999**
(21) Application number: 99303102.0
(22) Date of filing: 21.04.1999
(51) Int. Cl.: H04L 27/06

(54) **Demodulator circuit for ask modulated wave**

(30) Priority: 07.05.1998 JP 12439598
(71) Applicant: ALPS ELECTRIC CO., LTD., Ota-ku Tokyo 145 (JP)
(72) Inventor: Miyaura, Masao, Soma-shi, Fukushima-ken (JP)
(74) Representative: Kensett, John Hinton

(57) **Abstract**

A demodulator circuit whose demodulated data is not erroneous is realised with a simple construction. The demodulator circuit comprises a detection diode (3) and a data slicer (6) having a predetermined threshold level. A dc blocking capacitor (4) is provided between the detection diode and the data slicer, an ASK modulated signal is supplied to the detection diode, and a demodulated signal is outputted from the data slicer.

## Description

The present invention relates to a demodulator circuit suitable for use in a receiver or the like which is employed in an automatic toll collecting system of a highway.

### Related Art

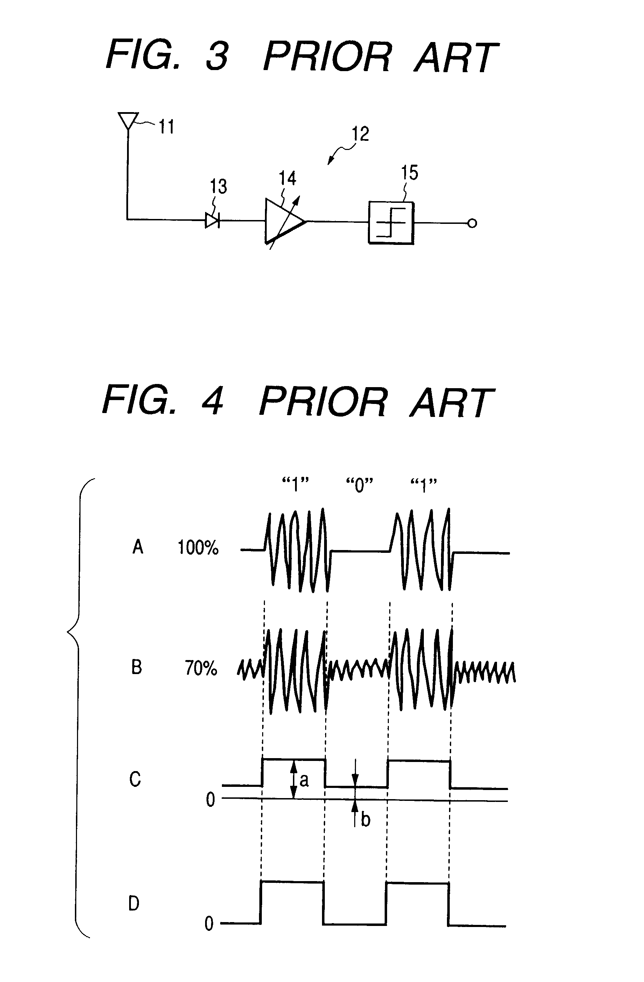

An ASK modulated wave is used for transmission and reception in an automatic toll collecting system of a highway. A conventional demodulator circuit for demodulating the ASK modulated wave will be described with reference to Fig. 3 and Figs. 4A to 4D. Fig. 3 is a construction diagram of a conventional ASK modulated wave demodulator circuit. Figs. 4A to 4D are explanatory diagrams for explaining the operation of the demodulator circuit shown in Fig. 3.

A signal transmitted from a transmission antenna of a tollgate to an approaching vehicle is ASK modulated and received by an antenna 11 of a receiver mounted on the vehicle. There are cases where the degree of modulation of the ASK modulated signal is 100% and it is about 70% as shown in Figs. 4A and 4B. The received signal is demodulated by a demodulator circuit 12. The demodulator circuit 12 comprises a detection diode 13, a gain control driver 14, and a data slicer 15 which are connected in series. The reception signal is first subjected to envelope detection by the detection diode 13, thereby allowing only a dc component to be outputted. After amplifying the dc component by the gain control driver (AGC amplifier) 14, the resultant data is passed through the data slicer 15, thereby obtaining digital data having data values of "1" and "0" as shown in Fig. 4D.

The gain control driver 14 is used to perform accurate demodulation also when the degree of modulation is lower than 100%. By controlling the degree of amplification, whether the dc component detected by the detection diode 13 has a level (a) of a period in which the data value is "1" or a level (b) of a period in which the data value is "0" is accurately determined according to the threshold level of the data slicer 15 as shown in Fig. 4C.

In the conventional demodulator circuit, however, the gain control driver 14 is used to amplify the signal subjected to the detection. Consequently, a circuit of a control system to control the gain is necessary. Since a close gain control according to the degree of modulation of the reception signal is also required, it makes the construction of the receiver more complicated and the price of the receiver higher. Since the gain control range of the gain control driver 14 is naturally limited, the dynamic range of a receivable signal is limited by the gain control range.

It is therefore an object of the present invention to realize a demodulator circuit whose demodulated data is not erroneous with a simple construction.

According to the invention, in order to solve the problems, there is provided a demodulator circuit for an ASK modulated wave comprising a detection diode and a data slicer having a predetermined threshold level, wherein a dc blocking capacitor is provided between the detection diode and the data slicer, an ASK modulated signal is inputted to the detection diode, and a demodulated signal is outputted from the data slicer.

Preferably, according to the demodulator circuit for an ASK modulated wave of the invention, a limiter amplifier is provided between the dc blocking capacitor and the data slicer.

Embodiments of the invention will now be described, by way of example only, with reference to the accompanying diagrammatic drawings, in which:

Fig. 1 is a construction diagram of a demodulator circuit for an ASK modulated wave of the invention.

Figs. 2A to 2F are explanatory diagrams for explaining the operation of the demodulator circuit shown in Fig. 1.

Fig. 3 is a construction diagram of a conventional demodulator circuit for an ASK modulated wave.

Figs. 4A to 4D are explanatory diagrams for explaining the operation of the demodulator circuit shown in Fig. 3.

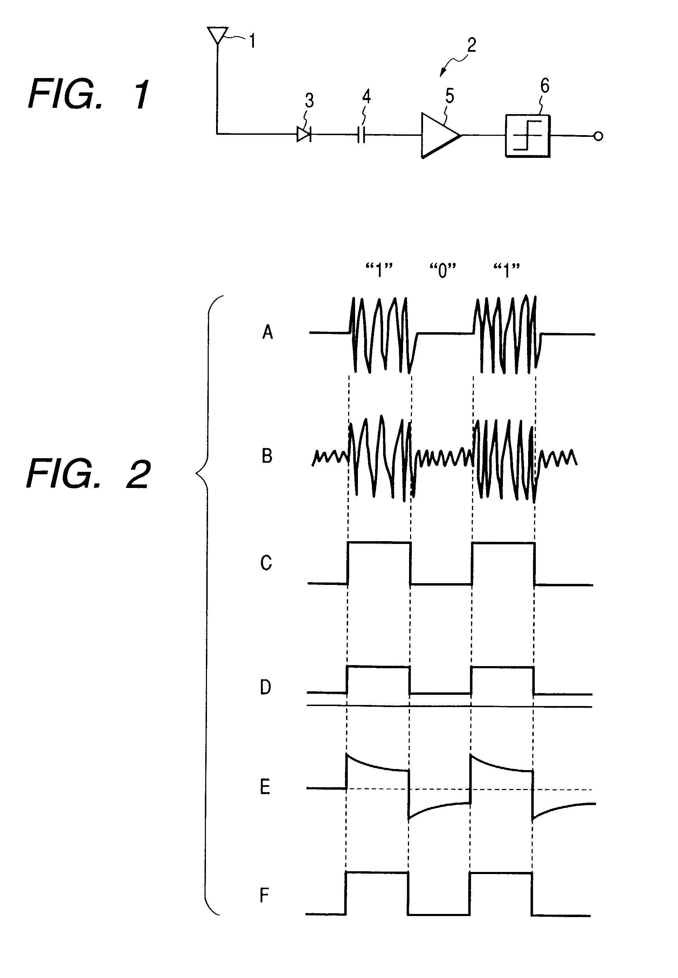

A demodulator circuit for an ASK modulated wave of the invention will be described with reference to Fig. 1 and Figs. 2A to 2F. Fig. 1 is a construction diagram of the demodulator circuit for the ASK modulated wave of the invention. Figs. 2A to 2F are explanatory diagrams for explaining the operation of the demodulator circuit shown in Fig. 1.

A signal transmitted from a transmission antenna of a tollgate to an approaching vehicle is ASK modulated, and received by an antenna 1 of a receiver mounted on the vehicle. The degree of modulation of the ASK modulated signal is determined to 70% or higher as standard. As shown in Figs. 2A and 2B, there are consequently cases such that the degree of modulation is 100% and it is about 70%. The received signal is demodulated by a demodulator circuit 2. The demodulator circuit 2 comprises a detection diode 3, a dc blocking capacitor 4, a limiter amplifier 5, and a data slicer 6 which are connected in series. The reception signal is first subjected to envelope detection by the detection diode 3, thereby allowing only a dc component to be outputted as shown in Figs. 2C and 2D. Fig. 2C corresponds to Fig. 2A and Fig. 2D corresponds to Fig. 2B. By passing the dc component through the dc blocking capacitor, the dc component is cut and a waveform as shown in Fig. 2E is obtained irrespective of the degree of modulation.

After that, the signal is sufficiently amplified by the amplifier (limiter amplifier) 5 having the amplitude regulating function and is further supplied to the data slicer 6 having a predetermined threshold level such as 0V (volt), thereby obtaining digital data having the data values of "1" and "0" as shown in Fig. 2F.

Since the signal detected by the detection diode 3 is supplied to the dc blocking capacitor 4 as mentioned above, a signal whose dc component is cut is obtained from the dc blocking capacitor 4 irrespective of the degree of modulation. Consequently, accurate data can be obtained from the data slicer 6.

Since the limiter amplifier 5 is provided, it is unnecessary to perform the gain control and to limit the dynamic range.

As described above, the demodulator circuit for an ASK modulated wave of the invention comprises the detection diode and the data slicer having a predetermined threshold level. The dc blocking capacitor is provided between the detection diode and the data slicer, the ASK modulated signal is supplied to the detection diode, and the demodulated signal is outputted from the data slicer. Consequently, the signal whose dc component is cut is obtained from the dc blocking capacitor irrespective of the degree of modulation, and accurate data is obtained from the data slicer.

According to the demodulator circuit for the ASK modulated wave of the invention, the limiter amplifier is provided between the dc blocking capacitor and the data slicer, so that it is unnecessary to perform the gain control and regulate the dynamic range.

## Claims

1. A demodulator circuit for an ASK modulated wave, comprising a detection diode and a data slicer having a predetermined threshold level, wherein a dc blocking capacitor is provided between the detection diode and the data slicer, an ASK modulated signal is supplied to the detection diode, and a demodulated signal is outputted from the data slicer.

2. A demodulator circuit for an ASK modulated wave according to claim 1, wherein a limiter amplifier is provided between the dc blocking capacitor and the data slicer.
